# EUROPÄISCHE PATENTSCHRIFT

(11) **EP 3 412 192 B1**
(45) Veröffentlichungstag und Bekanntmachung des Hinweises auf die Patenterteilung: **27.04.2022**
(21) Anmeldenummer: 18172090.5
(22) Anmeldetag: 14.05.2018
(51) Int. Cl.: A47L 9/28

(54) **SICH SELBSTTÄTIG INNERHALB EINER UMGEBUNG FORTBEWEGENDES FAHRZEUG SOWIE SYSTEM MIT EINEM FAHRZEUG UND EINER EXTERNEN BELEUCHTUNGSEINRICHTUNG**
VEHICLE MOVING AUTOMATICALLY WITHIN AN ENVIRONMENT AND SYSTEM WITH A VEHICLE AND AN EXTERNAL LIGHTING DEVICE
VÉHICULE À DÉPLACEMENT AUTOMATIQUE DANS UNE ZONE ENVIRONNANTE AINSI QUE SYSTÈME COMPORTANT UN VÉHICULE ET UN DISPOSITIF D'ÉCLAIRAGE EXTERNE

(30) Priorität: 09.06.2017 DE 102017112793
(43) Veröffentlichungstag der Anmeldung: 12.12.2018
(73) Patentinhaber: Vorwerk & Co. Interholding GmbH, 42275 Wuppertal (DE)
(72) Erfinder: Erkek, David, 5000 Aarau (CH); Hackert, Georg, 44869 Bochum (DE); Isenberg, Gerhard, 50668 Köln (DE); Ortmann, Roman, 47057 Duisburg (DE); Schmidt, Andreas, 40822 Mettmann (DE)
(74) Vertreter: Müller, Enno

(56) Entgegenhaltungen:
- WO-A1-2016/133320
- US-A1- 2009 028 387
- US-A1- 2014 207 280

## Beschreibung

### Gebiet der Technik

Die Erfindung betrifft ein sich selbsttätig innerhalb einer Umgebung fortbewegendes, unbemanntes Fahrzeug, insbesondere einen Reinigungsroboter, mit einer Detektionseinrichtung zur Detektion von Objektdaten einer Umgebung des Fahrzeugs und einer Recheneinrichtung zum Erstellen einer Umgebungskarte anhand von aufgenommenen Objektdaten, wobei die Umgebungskarte Positionen von innerhalb der Umgebung befindlichen Objekten aufweist.

Des Weiteren betrifft die Erfindung ein System aus mindestens einem sich selbsttätig innerhalb einer Umgebung fortbewegenden, unbemannten Fahrzeug mit einer Detektionseinrichtung zur Detektion von Objektdaten einer Umgebung des Fahrzeugs und einer Recheneinrichtung zum Erstellen einer Umgebungskarte anhand von aufgenommenen Objektdaten, mindestens einer separat zu dem Fahrzeug ausgebildeten, externen Beleuchtungseinrichtung und einer Steuereinrichtung zum Übermitteln eines Steuerbefehls an die Beleuchtungseinrichtung.

Des Weiteren betrifft die Erfindung ein Verfahren zum Betrieb eines sich selbsttätig innerhalb einer Umgebung fortbewegenden, unbemannten Fahrzeugs und/oder eines Systems aus einem solchen Fahrzeug, einer Beleuchtungseinrichtung und einer Steuereinrichtung, wobei eine Detektionseinrichtung des Fahrzeugs Objektdaten in einer Umgebung des Fahrzeugs aufnimmt und eine Recheneinrichtung eine Umgebungskarte anhand von aufgenommenen Objektdaten erstellt.

### Stand der Technik

Sich selbsttätig fortbewegende Fahrzeuge sind im Stand der Technik bekannt. Diese können beispielsweise als autonome Bodenbearbeitungsgeräte ausgebildet sein, insbesondere als Reinigungsroboter, Mähroboter, Schleif- und/oder Polierroboter und dergleichen. Die Fahrzeuge weisen eine Navigationseinrichtung auf, mittels welcher sich das Fahrzeug innerhalb einer Umgebung orientieren kann. Die Navigationseinrichtung beinhaltet üblicherweise eine Detektionseinrichtung, beispielsweise eine Kamera und/oder eine Abstandsmesseinrichtung, welche Daten der Umgebung aufnimmt, die zu einer Umgebungskarte verarbeitet werden, mittels welcher sich das Fahrzeug selbst lokalisieren und navigieren kann.

In Abhängigkeit von der Art der Detektionseinrichtung, insbesondere in Verbindung mit optischen Detektionseinrichtungen, kann es vorteilhaft sein, einen Beleuchtungszustand innerhalb eines Umgebungsteilbereiches zu verbessern, beispielsweise eine Lichtstärke innerhalb dieses Umgebungsteilbereiches zu erhöhen, so dass ein von einer Kamera aufgenommenes Bild besser zu erkennen ist, oder eine Lichtstärke zu reduzieren, so dass ein von der Detektionseinrichtung emittierter Lichtstrahl bzw. dessen Rückreflexion besser detektiert werden kann.

Die Offenlegungsschrift US 2013/0056032 A1 offenbart beispielsweise einen Reinigungsroboter mit einer Bilderfassungseinrichtung und einer integrierten Lampe, welche entweder durch eine Nutzereingabe ein- und ausschaltbar ist oder automatisch in Abhängigkeit von einer detektierten Beleuchtungsintensität der Umgebung des Roboters geschaltet wird. Des Weiteren ist es offenbart, dass ein Nutzer mittels eines Endgerätes einen Steuerbefehl an den Reinigungsroboter übermittelt, welchen der Roboter an eine externe Lampe weiterleitet, um diese ein- oder auszuschalten.

Aus der Veröffentlichung US 2009/0028387 A1 ist des Weiteren ein Fahrzeug mit einer Bilderfassungseinrichtung, einer Beleuchtungsstärke-Bestimmungseinrichtung und einer Lichtausgabe-Einrichtung bekannt, wobei ein Bild einer Umgebung aufgenommen wird und die Beleuchtungsstärke-Bestimmungseinrichtung ermittelt, ob die von der Bilderfassungseinrichtung zu erfassende Position der Umgebung ausreichend ausgeleuchtet ist. Sollte dies nicht der Fall sein, wird die Lichtausgabe-Einrichtung betrieben, um die Position zu beleuchten. Gemäß einer Ausführung ist des Weiteren vorgesehen, dass ein erfasstes Bild dahingehend ausgewertet wird, ob Lichtquellen in der Umgebung an oder ausgeschaltet sind. Dazu werden Helligkeitswerte der Pixel des Bildes ausgewertet.

Die Veröffentlichung US 2014/0207280 A1 offenbart des Weiteren die Einbindung eines mobilen Roboters in ein Hausautomationssystem.

### Zusammenfassung der Erfindung

Ausgehend von dem vorgenannten Stand der Technik ist es Aufgabe der Erfindung, ein Fahrzeug, ein System und ein Verfahren fortzubilden, insbesondere so, dass eine Änderung eines Beleuchtungszustandes in einer Umgebung des Fahrzeugs ohne eine Nutzereingabe möglich ist.

Zur Lösung dieser Aufgabe wird zunächst ein sich selbsttätig innerhalb einer Umgebung fortbewegendes, unbemanntes Fahrzeug vorgeschlagen, dessen Umgebungskarte eine Information über eine Position einer separat zu dem Fahrzeug ausgebildeten, externen Beleuchtungseinrichtung sowie eine oder mehrere weitere Informationen über die Beleuchtungseinrichtung aufweist, wobei die Information ausgewählt ist aus der Gruppe: Lichtstärke, Emissionsspektrum, Position und Größe eines von der Beleuchtungseinrichtung ausleuchtbaren Umgebungsteilbereiches, Art der Beleuchtungseinrichtung.

Erfindungsgemäß ist die Umgebungskarte des Fahrzeugs nun um Informationen ergänzt, welche eine Beleuchtungseinrichtung in der Umgebung des Fahrzeugs betreffen. Neben der Position sind ein oder mehrere zusätzliche Informationen zu dieser Beleuchtungseinrichtung gespeichert, so dass das Fahrzeug über alle relevanten Informationen zu der Beleuchtungseinrichtung verfügt und somit beispielsweise aus einer Menge mehrerer Beleuchtungseinrichtungen automatisch diejenige auswählen kann, welche für eine aktuelle Situation und Betriebsaufgabe des Fahrzeugs am besten geeignet ist. Es ist nicht mehr erforderlich, Informationen auf einem separaten Endgerät bereitzuhalten, um einen Beleuchtungszustand innerhalb eines Umgebungsteilbereiches des Fahrzeugs zu ändern. In der Umgebungskarte kann beispielsweise eine Lichtstärke einer Beleuchtungseinrichtung hinterlegt sein. Im Sinne von hinterlegt sein ist es nicht zwingend erforderlich, dass die Lichtstärke als solche in die Umgebungskarte hineingeschrieben ist. Vielmehr kann zu einer in der Umgebungskarte gespeicherten Beleuchtungseinrichtung auch ein Hinweis auf eine separate Datei hinterlegt sein, welche weitere Informationen zu der Beleuchtungseinrichtung aufweist, hier beispielsweise eine Lichtstärke der Beleuchtungseinrichtung. Eine Steuereinrichtung des Fahrzeugs kann vor Erstellung einer Betriebsstrategie auf diese Information zugreifen. Die Lichtstärke kann eine maximale Lichtstärke eines Leuchtmittels der Beleuchtungseinrichtung sein oder auch ein dimmbarer Lichtstärkebereich des Leuchtmittels. Darüber hinaus ist es auch möglich, eine aktuelle Lichtstärke der Beleuchtungseinrichtung zu speichern. Die aktuelle Lichtstärke kann beispielsweise von einem Sensor des Fahrzeugs gemessen werden. Die Lichtstärke ist nicht beschränkend im Sinne einer physikalischen Einheit zu verstehen, zumindest nicht ausschließlich. Unter diesem Begriff kann hier beispielsweise auch eine elektrische Leistungsaufnahme (Nennleistung) eines Leuchtmittels verstanden werden. Die in der Umgebungskarte gespeicherten bzw. mit dieser verknüpften Informationen zu der Beleuchtungseinrichtung können des Weiteren ein Emissionsspektrum der Beleuchtungseinrichtung bzw. dessen Leuchtmittel aufweisen. Das Emissionsspektrum gibt diejenigen Lichtfrequenzen an, mit welchen die Beleuchtungseinrichtung bzw. das Leuchtmittel Licht emittiert. Das Emissionsspektrum kann veränderlich sein, zum Beispiel weil es sich um ein farbveränderliches Leuchtmittel handelt. In diesem Fall kann eine Information hinterlegt sein, welche spektralen Bereiche, gegebenenfalls welche separaten Frequenzen, angesteuert werden können. Die in der Umgebungskarte hinterlegten Informationen zu dem Emissionsspektrum sollten dabei stets auch eine Amplitudenangabe für die jeweilige Lichtfrequenz beinhalten. Des Weiteren kann eine Information zu einer Beleuchtungseinrichtung auch eine Angabe zu einer Position und/oder Größe eines von der Beleuchtungseinrichtung ausleuchtbaren Umgebungsteilbereiches der Umgebung enthalten. Durch diese Information erhält eine Steuereinrichtung des Fahrzeugs einen Hinweis darauf, welchen Teilbereich der Umgebung die Beleuchtungseinrichtung beleuchten kann, insbesondere in Bezug auf die Ausdehnung und/oder Form des ausleuchtbaren Umgebungsteilbereiches. Zusätzlich ist es vorteilhaft, wenn bei dimmbaren Beleuchtungseinrichtungen auch eine Information darüber gespeichert ist, wie sich die Position und/oder Größe des ausleuchtbaren Umgebungsteilbereiches mit der Änderung der Lichtstärke ändert. Des Weiteren kann die Umgebungskarte auch eine Information über die Art der Beleuchtungseinrichtung aufweisen. Die Art der Beleuchtungseinrichtung kann beispielsweise eine Art eines Leuchtmittels, einen Herstellertyp der Beleuchtungseinrichtung bzw. des Leuchtmittels und dergleichen beinhalten. Die Art der Beleuchtungseinrichtung kann auch beispielsweise deren Form betreffen, beispielsweise ausgebildet als Stehlampe, Deckenstrahler, Tischlampe, Wandlampe und dergleichen, oder die Art des Leuchtmittels, beispielsweise eine LED, eine Leuchtstoffröhre oder eine Glühwendel. Des Weiteren kann die Information auch das Alter der Beleuchtungseinrichtung und/oder des Leuchtmittels beinhalten, eine Angabe darüber, ob das Emissionsspektrum der Beleuchtungseinrichtung variabel ist, ob die Beleuchtungseinrichtung dimmbar ist und/oder ähnliches. Die Informationen zu den Beleuchtungseinrichtungen können entweder durch Sensoren des Fahrzeugs selbst detektiert werden, von einem Nutzer über eine Eingabeschnittstelle in einen Speicher des Fahrzeugs eingegeben werden oder durch eine externe Datenbank bereitgestellt werden, auf welche das Fahrzeug zugreifen kann. Beispielsweise kann das Fahrzeug für einen Registrierungsprozess der Beleuchtungseinrichtungen jede Beleuchtungseinrichtung ansteuern und entsprechende Intensitätsmessungen, Spektralmessungen oder dergleichen durchführen. Diese Messungen können vorteilhaft durchgeführt werden, während ein Leuchtmittel der Beleuchtungseinrichtung spektral geändert und/oder gedimmt wird.

Es wird vorgeschlagen, dass das Fahrzeug eine Steuereinrichtung aufweist, welche eingerichtet ist, einen Steuerbefehl zum Steuern einer externen Beleuchtungseinrichtung zu generieren. Das Fahrzeug ist dadurch ausgebildet, auf eine Beleuchtungseinrichtung innerhalb seiner Umgebung einzuwirken. Das Steuern der externen Beleuchtungseinrichtung kann beispielsweise ein Ein- und/oder Ausschalten, ein Dimmen der Lichtstärke, eine Änderung des Emissionsspektrums oder ähnliches beinhalten. Insbesondere kann die Steuereinrichtung eingerichtet sein, einen Steuerbefehl in Abhängigkeit von einem Betrieb der Detektionseinrichtung zu generieren. Beispielsweise kann es vorgesehen sein, dass die Steuereinrichtung stets dann Steuerbefehle an die externe Beleuchtungseinrichtung übermittelt, wenn die Detektionseinrichtung des Fahrzeugs in Betrieb ist, d. h. wenn zum Beispiel eine Kamera aktiviert ist. Des Weiteren kann es auch vorgesehen sein, dass die Steuereinrichtung einen Steuerbefehl in Abhängigkeit von einem Beleuchtungszustand in einem Detektionsbereich der Detektionseinrichtung generiert. Bei dieser Ausgestaltung wird eine Beleuchtungseinrichtung beispielsweise dann betätigt, wenn ein definierter Beleuchtungszustand in einem Detektionsbereich der Detektionseinrichtung vorliegt. So kann zum Beispiel vorgesehen sein, dass eine Beleuchtungseinrichtung eingeschaltet wird, wenn ein Sensor der Detektionseinrichtung erkennt, dass der Beleuchtungszustand, beispielsweise die Lichtstärke, nicht ausreichend ist, um ein Kamerabild optimal aufzunehmen. Das Steuern der externen Beleuchtungseinrichtung empfiehlt sich stets dann, wenn das Fahrzeug in einem definierten Betriebsmodus arbeitet, beispielsweise im Rahmen einer kamerabasierten und/oder kameraunterstützten Navigation, einer Objekterkennung oder einer Raumüberwachung. Insbesondere kann durch einen Steuerbefehl auf die externe Beleuchtungseinrichtung eingewirkt werden, wenn die Lichtverhältnisse innerhalb des Detektionsbereiches der Detektionseinrichtung ungünstig sind, so dass beispielsweise eine zuverlässige Verwendung der Detektionseinrichtung nicht möglich ist. In diesem Fall kann die Steuereinrichtung des Fahrzeugs eine oder mehrere Beleuchtungseinrichtungen aktivieren, die vorzugsweise in der direkten Umgebung des Fahrzeugs vorhanden sind. Die nächstliegenden Beleuchtungseinrichtungen kann das Fahrzeug über die in der Umgebungskarte hinterlegten Informationen erkennen. Ferner ist es auch möglich, dass grundsätzlich eine zu dem Fahrzeug nächstliegende Beleuchtungseinrichtung aktiviert ist, um dadurch beispielsweise einem in dem Raum anwesenden Nutzer die Aktivität des Fahrzeugs anzuzeigen. Die Übermittlung der Steuerbefehle von der Steuereinrichtung des Fahrzeugs an die externe Beleuchtungseinrichtung kann vorzugsweise durch eine drahtlose Datenkommunikation erfolgen. Für die Datenkommunikation könnte eine Technologie, wie beispielsweise RFID, NFC, iBeacons, Bluetooth, WLAN oder auch Zigbee zum Einsatz kommen. Für Beleuchtungseinrichtungen, welche in einer größeren Entfernung zu dem Fahrzeug positioniert sind, wie beispielsweise Deckenlampen, könnten Technologien mit einer größeren Reichweite verwendet werden, während für Beleuchtungseinrichtungen, welchen sich das Fahrzeug auf kürzerer Distanz nähern kann, Technologien mit kürzerer Reichweite verwendet werden, zum Beispiel RFID, NFC, iBeacons.

Unterstützend kann es vorgesehen sein, dass das Fahrzeug eine eigene, integrierte Beleuchtungseinrichtung aufweist, um eine Ausleuchtung auch in solchen Umgebungsteilbereichen zu erreichen, in welchen eine Beleuchtung durch externe Beleuchtungseinrichtungen nicht ausreicht. Dafür könnte das Fahrzeug mindestens eine Beleuchtungseinrichtung aufweisen, beispielsweise eine Visible-LED oder eine Infrarot-LED. Die eigene Beleuchtungseinrichtung des Fahrzeugs kann prinzipiell in gleicher Art und Weise wie eine externe Beleuchtungseinrichtung durch einen Steuerbefehl der Steuereinrichtung des Fahrzeugs angesteuert werden, insbesondere automatisch in Abhängigkeit von einem Betrieb der Detektionseinrichtung des Fahrzeugs und/oder einem Beleuchtungszustand der Umgebung, insbesondere innerhalb des Detektionsbereiches der Detektionseinrichtung.

Insbesondere wird vorgeschlagen, dass die Steuereinrichtung eingerichtet ist, einen Steuerbefehl zum Einschalten einer Beleuchtungseinrichtung zu generieren, wenn ein von dieser Beleuchtungseinrichtung ausleuchtbarer Umgebungsteilbereich einen Detektionsbereich der Detektionseinrichtung zumindest teilweise überlappt. Insbesondere kann vorgesehen sein, dass die Steuereinrichtung einen Steuerbefehl zum Einschalten einer Beleuchtungseinrichtung in Abhängigkeit von einem detektierten Beleuchtungszustand innerhalb des Detektionsbereiches generiert. Gemäß der zuerst offenbarten, allgemeineren Ausgestaltung, kann vorgesehen sein, dass die Steuereinrichtung des Fahrzeugs auf die Umgebungskarte zugreift und anhand eines aktuellen Verfahrweges prüft, welche Beleuchtungseinrichtungen in bzw. an dem Verfahrweg liegen, und zwar so, dass ein Umgebungsteilbereich, welchen die Beleuchtungseinrichtung ausleuchten kann, in den Detektionsbereich der Detektionseinrichtung des Fahrzeugs ragt. Der von der Beleuchtungseinrichtung ausleuchtbare Umgebungsteilbereich ist beispielsweise ein Lichtkegel, welcher von der Beleuchtungseinrichtung auf eine Bodenfläche projiziert wird. Da ein solcher Lichtkegel üblicherweise keine scharfe räumliche Begrenzung aufweist, kann eine Begrenzung beispielsweise dort definiert werden, wo eine lokale Lichtstärke noch 70 Prozent der maximalen Lichtstärke aufweist. Anhand der Umgebungskarte prüft das Fahrzeug, welche ausleuchtbaren Umgebungsteilbereiche sein Verfahrweg durchquert. Sofern zumindest eine teilweise Überlappung besteht, kann die betreffende Beleuchtungseinrichtung in diesem Bereich eingeschaltet werden, um beispielsweise die Qualität eines Kamerabildes der Detektionseinrichtung zu verbessern. Sofern es sich bei der Detektionseinrichtung nicht um eine Bilderfassungseinrichtung handelt, sondern vielmehr um eine Detektionseinrichtung, welche selbst Licht aussendet, beispielsweise eine Reflexionsmesseinrichtung, kann stattdessen vorgesehen sein, dass diejenigen Beleuchtungseinrichtungen der Umgebung, deren ausleuchtbare Umgebungsteilbereiche den Verfahrweg des Fahrzeugs überlappen, ausgeschaltet, gedimmt oder mit einem Emissionsspektrum betrieben werden, welches nicht dem Spektrum eines Sensors der Detektionseinrichtung entspricht. Besonders bevorzugt kann der Steuerbefehl in Abhängigkeit von einem innerhalb des Detektionsbereiches der Detektionseinrichtung detektieren Beleuchtungszustand generiert werden. In diesem Fall misst ein Sensor des Fahrzeugs, beispielsweise ein Sensor der Detektionseinrichtung, welchen Beleuchtungszustand der von ihm erfasste Detektionsbereich derzeit aufweist. Sollte beispielsweise festgestellt werden, dass der Beleuchtungszustand zu hell, zu dunkel oder zu ungleichmäßig ausgeleuchtet ist, können eine oder mehrere der zuvor genannten Maßnahmen gesteuert werden.

Des Weiteren wird vorgeschlagen, dass das Fahrzeug ein Kommunikationsmodul, insbesondere ein WLAN-Modul, zur Kommunikation mit einer externen Beleuchtungseinrichtung und/oder einer zentralen Steuereinrichtung eines Hausautomationsnetzwerkes aufweist. Mittels des Kommunikationsmoduls kann das Fahrzeug bzw. dessen Steuereinrichtung entweder unmittelbar mit der betreffenden Beleuchtungseinrichtung kommunizieren oder einen Steuerbefehl zunächst an eine zentrale Steuereinrichtung eines Hausautomationsnetzwerkes übermitteln, welche den Steuerbefehl dann entweder unverändert an die Beleuchtungseinrichtung weiterleitet oder daraus selber einen eigenen Steuerbefehl generiert, modifiziert oder ergänzt. Mittels des Kommunikationsmoduls kann das Fahrzeug zum einen Steuerbefehle übermitteln, jedoch auch Informationen von einer Beleuchtungseinrichtung oder der zentralen Steuereinrichtung erhalten. Je nach der benötigten Reichweite der Kommunikationspartner können alternativ zu einem WLAN-Modul auch andere Kommunikationsmodule zum Einsatz kommen, beispielsweise RFID-Module, NFC-Module und weitere.

Neben dem zuvor vorgeschlagenen Fahrzeug wird des Weiteren ein System aus einem sich selbsttätig innerhalb einer Umgebung fortbewegenden, unbemannten Fahrzeug mit einer Detektionseinrichtung zur Detektion von Objektdaten einer Umgebung des Fahrzeugs und einer Recheneinrichtung zum Erstellen einer Umgebungskarte anhand von aufgenommenen Objektdaten, mindestens einer separat zu dem Fahrzeug ausgebildeten, externen Beleuchtungseinrichtung und einer Steuereinrichtung zum Übermitteln eines Steuerbefehls an die Beleuchtungseinrichtung vorgeschlagen, wobei die Umgebungskarte eine Information über eine Position einer Beleuchtungseinrichtung sowie eine oder mehrere weitere Informationen über die Beleuchtungseinrichtung aufweist, wobei die Information ausgewählt ist aus der Gruppe: Lichtstärke, Emissionsspektrum, Position und/oder Größe eines von der Beleuchtungseinrichtung ausleuchtbaren Umgebungsteilbereiches, Art der Beleuchtungseinrichtung. Das System besteht erfindungsgemäß aus einem Fahrzeug, einer zu dem Fahrzeug extern ausgebildeten Beleuchtungseinrichtung und einer Steuereinrichtung, welche Steuerbefehle zum Steuern der externen Beleuchtungseinrichtung generiert und übermittelt. Das System kann eine Mehrzahl von Beleuchtungseinrichtungen aufweisen, welche innerhalb der Umgebung verteilt sind. Des Weiteren können auch mehrere Fahrzeuge innerhalb des Systems verwendet werden. Das Fahrzeug verfügt wiederum über eine Umgebungskarte, innerhalb welcher Informationen über ein oder mehrere Beleuchtungseinrichtungen des Systems enthalten sind. Die Informationen sind dabei eine Position der jeweiligen Beleuchtungseinrichtung sowie eine weitere Information aus der vorgenannten Gruppe, welche die Eigenschaften der Beleuchtungseinrichtung näher spezifiziert. Die Umgebungskarte des Fahrzeugs kann entweder in dem Fahrzeug selbst gespeichert sein oder auch in einer externen Speichereinrichtung, beispielsweise auf einem Webserver, auf welchen die Steuereinrichtung und gegebenenfalls auch die Beleuchtungseinrichtungen selbst zugreifen können. Die Umgebungskarte kann vorteilhaft von einer eigenen Einrichtung des Fahrzeugs erstellt werden, indem das Fahrzeug beispielsweise während einer Lernfahrt innerhalb der Umgebung umherfährt und die Objektdaten, insbesondere auch die Standorte von Beleuchtungseinrichtungen innerhalb der Umgebung aufnimmt. Die Umgebungskarte beinhaltet vorzugsweise auch einen aktuellen Standort des Fahrzeugs bzw. der innerhalb des Systems vorhandenen weiteren Fahrzeuge. Die Informationen über die Beleuchtungseinrichtungen, welche in der Umgebungskarte gespeichert sind, bzw. an einem separaten Speicherort mit der Umgebungskarte verknüpft sind, wurden zuvor bereits in Bezug auf das erfindungsgemäße Fahrzeug näher erläutert. Entsprechendes gilt auch für das erfindungsgemäße System.

Des Weiteren wird vorgeschlagen, dass die Steuereinrichtung eine zentrale Steuereinrichtung ist, welche eine Kommunikationsverbindung zu dem Fahrzeug und eine Kommunikationsverbindung zu der Beleuchtungseinrichtung aufweist. Insbesondere kann die Steuereinrichtung eine Steuereinrichtung eines Hausautomationsnetzwerkes sein. Gemäß dieser Ausführung wird die Beleuchtungseinrichtung nun nicht mehr direkt durch eine Steuereinrichtung des Fahrzeugs gesteuert, sondern vielmehr über eine zentrale Steuereinrichtung des Systems, welche mit einem oder mehreren Fahrzeugen und einer oder mehreren Beleuchtungseinrichtungen in Kommunikationsverbindung steht. Die Komponenten des Systems, nämlich die Fahrzeuge und Beleuchtungseinrichtungen können beispielsweise in ein WLAN-Heimnetzwerk eingebunden sein, in welchem die zentrale Steuereinrichtung einen Access Point bildet. Die Beleuchtungseinrichtungen können vorzugsweise über steuerbare Zwischenstecker mit einer üblichen Haushaltsstromversorgung verbunden sein. Alternativ kann die Steuerung der Beleuchtungseinrichtungen jedoch auch direkt innerhalb eines Sicherungskastens des Haushaltes oder über lokale Steuerungsmodule innerhalb der Beleuchtungseinrichtungen erfolgen. Zum Zwecke einer zentralen Steuerung könnte sich das Fahrzeug beispielsweise mit einer zentralen Steuereinrichtung einer Hausautomationszentrale verbinden, bei der sämtliche schaltbaren Beleuchtungseinrichtungen registriert und über diese steuerbar sind. Die Informationen der Hausautomationszentrale sind in die Umgebungskarte integriert oder mit dieser verknüpft. In der Umgebungskarte, auf welche die zentrale Steuereinrichtung zugreift, können sowohl die Standorte als auch weitere Informationen der jeweiligen Beleuchtungseinrichtung hinterlegt sein. Dadurch stehen einem mit der zentralen Steuereinrichtung verbundenen Fahrzeug sämtliche Informationen zur Verfügung. Die Kommunikation der Fahrzeuge bzw. Beleuchtungseinrichtungen mit der zentralen Steuereinrichtung erfolgt vorzugsweise über eine drahtlose Kommunikation, beispielsweise WLAN, alternativ auch über eine drahtgebundene Verbindung wie zum Beispiel PowerLAN. Eine drahtgebundene Kommunikation kann beispielsweise vorteilhaft sein zwischen der zentralen Steuereinrichtung und einer Basisstation, mit welcher sich ein Fahrzeug zum Aufladen eines Akkumulators verbindet. Die Ansteuerung der einzelnen Beleuchtungseinrichtungen erfolgt über die zentrale Steuereinrichtung, die dann als Gateway zu den einzelnen Beleuchtungseinrichtungen dient. Falls verschiedene Kommunikationsprotokolle zwischen den Teilnehmern des Systems verwendet werden, kann die zentrale Steuereinrichtung zusätzlich eine Konvertierung der Kommunikationsprotokolle durchführen.

Es wird vorgeschlagen, dass die Steuereinrichtung eingerichtet ist, einen Steuerbefehl zum Steuern einer externen Beleuchtungseinrichtung zu generieren und an die Beleuchtungseinrichtung zu übermitteln und/oder von dem Fahrzeug zu empfangen und an die Beleuchtungseinrichtung zu übermitteln. Gemäß der erstgenannten Alternative wird der Steuerbefehl für die Beleuchtungseinrichtung entweder mittels einer lokalen Steuereinrichtung eines Fahrzeugs oder mittels der zentralen Steuereinrichtung des Systems generiert. Dieser Steuerbefehl kann dann entweder direkt von der lokalen Steuereinrichtung des Fahrzeugs an die jeweilige Beleuchtungseinrichtung übermittelt werden oder in dem Fall, dass der Steuerbefehl von der zentralen Steuereinrichtung des Systems erstellt wurde, zentral von der Steuereinrichtung an die Beleuchtungseinrichtung. Gemäß der zweiten genannten Alternative kann der Steuerbefehl von einer lokalen Steuereinrichtung eines Fahrzeugs erstellt werden und an die zentrale Steuereinrichtung übermittelt werden, die den Steuerbefehl dann nur an die Beleuchtungseinrichtung übermittelt bzw. weiterleitet. Die zentrale Steuereinrichtung kann den Steuerbefehl dabei unverändert an die Beleuchtungseinrichtung weiterleiten oder auch eine Modifizierung und/oder Ergänzung vornehmen. Des Weiteren ist wie zuvor erläutert auch eine Konvertierung eines Kommunikationsprotokolls denkbar.

Des Weiteren wird vorgeschlagen, dass die Steuereinrichtung eingerichtet ist, eine Beleuchtungseinrichtung zu steuern, wenn ein von dieser Beleuchtungseinrichtung ausleuchtbarer Umgebungsteilbereich einen Detektionsbereich der Detektionseinrichtung des Fahrzeugs zumindest teilweise überlappt. Insbesondere kann vorgesehen sein, dass die Steuereinrichtung eingerichtet ist, die Beleuchtungseinrichtung in Abhängigkeit von einem detektierten Beleuchtungszustand innerhalb des Detektionsbereiches anzuschalten. Grundsätzlich kann der Steuerbefehl eine Anweisung zum Anschalten, Ausschalten, Dimmen, zur Variation eines Emissionsspektrums oder dergleichen beinhalten. Insbesondere wird vorgeschlagen, dass eine Beleuchtungseinrichtung eingeschaltet wird, um einer als Bilderfassungseinrichtung ausgebildeten Detektionseinrichtung die Aufnahme eines hochqualitativen Bildes zu ermöglichen. Alternativ kann es jedoch auch vorgesehen sein, insbesondere dann, wenn die Detektionseinrichtung selbst Licht für beispielsweise eine Reflexionsmessung emittiert, eine oder mehrere Beleuchtungseinrichtungen auszuschalten, um eine Intensität des Umgebungslichtes zu reduzieren, da anderenfalls eine Verschlechterung des Messergebnisses der Detektionseinrichtung die Folge sein könnte. Es wird vorgeschlagen, nur diejenigen Beleuchtungseinrichtungen zu steuern, welche sich aktuell so in bzw. an einem Verfahrweg des Fahrzeugs befinden, dass der Detektionsbereich der Detektionseinrichtung zumindest teilweise mit einem von einer Beleuchtungseinrichtung ausleuchtbaren Umgebungsteilbereich überlappt. Beleuchtungseinrichtungen, die weiter entfernt von dem Verfahrweg des Fahrzeugs liegen, werden üblicherweise nicht gesteuert, da diese die Detektionsqualität der Detektionseinrichtung üblicherweise nicht beeinflussen können.

Es wird vorgeschlagen, dass die Steuereinrichtung eingerichtet ist, Fahrzeuge und/oder Beleuchtungseinrichtungen an dem System zu registrieren und eine Information über eine Position, eine Lichtstärke, ein Emissionsspektrum, eine Position und/oder Größe eines von der Beleuchtungseinrichtung ausleuchtbaren Umgebungsteilbereiches und/oder eine Art der Beleuchtungseinrichtung zu empfangen. Für eine Registrierung der Beleuchtungseinrichtungen an dem System kann das Fahrzeug verwendet werden. Das Fahrzeug kann jede Beleuchtungseinrichtung gezielt ansteuern. Vorzugsweise sind die Beleuchtungseinrichtungen während der Registrierung angeschaltet, so dass eine Detektionseinrichtung des Fahrzeugs die Lichtstärke, ein Emissionsspektrum, eine Position und/oder Größe der Beleuchtungseinrichtung, einen von der Beleuchtungseinrichtung ausleuchtbaren Umgebungsteilbereich und gegebenenfalls weitere Parameter mit geeigneten Sensoren messen kann. Vorzugsweise wird eine räumliche Messung durchgeführt, bei welcher sich einer oder mehrere Sensoren des Fahrzeugs um 360 Grad drehen, so dass eine Rundum-Messung möglich ist. Möglich ist auch, dass sich das Fahrzeug in die Mitte eines Raumes stellt und dort eine 360 Grad-Messung durchführt. Falls eine Beleuchtungseinrichtung ein variables Emissionsspektrum aufweist, empfiehlt es sich, dass bei dieser Registrierung eine gezielte Variation des Emissionsspektrums erfolgt, so dass ein spektraler Sensor des Fahrzeugs das Emissionsspektrum vermessen kann. Ebenso kann bei dimmbaren Beleuchtungseinrichtungen der dimmbare Lichtstärkenbereich detektiert und registriert werden. Dadurch ist es möglich, die Identifizierung der einzelnen Beleuchtungseinrichtungen vereinfacht und beschleunigt durchzuführen. Des Weiteren ist es möglich, dass die Fahrzeuge und/oder Beleuchtungseinrichtungen bei einer Ersteinrichtung des Systems eine Parameterdatei an die zentrale Steuereinrichtung des Systems übermitteln, so dass die entsprechenden Parameter in einem zentralen Speicher des Systems hinterlegt werden können. Alternativ oder zusätzlich ist es auch möglich, dass ein Nutzer des Systems derartige Informationen über eine Bedieneinrichtung des Fahrzeugs und/oder einer Beleuchtungseinrichtung an das System übermittelt.

Schließlich wird mit der Erfindung auch ein Verfahren zum Betrieb eines sich selbsttätig innerhalb einer Umgebung fortbewegenden, unbemannten Fahrzeugs und/oder eines Systems aus einem solchen Fahrzeug, einer Beleuchtungseinrichtung und einer Steuereinrichtung vorgeschlagen, wobei eine Detektionseinrichtung des Fahrzeugs Objektdaten in einer Umgebung des Fahrzeugs aufnimmt und eine Recheneinrichtung eine Umgebungskarte anhand von aufgenommenen Objektdaten erstellt, wobei das Fahrzeug eine Beleuchtungseinrichtung innerhalb der Umgebung detektiert und eine Information über die Position der Beleuchtungseinrichtung sowie eine oder mehrere weitere Informationen über die Beleuchtungseinrichtung aufnimmt, wobei die Information ausgewählt ist aus der Gruppe: Lichtstärke, Emissionsspektrum, Position und/oder Größe eines von der Beleuchtungseinrichtung ausleuchtbaren Umgebungsteilbereiches, Art der Beleuchtungseinrichtung. Die Umgebungskarte kann vorzugsweise durch eine eigene Recheneinrichtung des Fahrzeugs erstellt werden und in einer lokalen Speichereinrichtung des Fahrzeugs gespeichert werden. Sofern das Fahrzeug eine Komponente eines zuvor beschriebenen Systems mit mindestens einem Fahrzeug und mindestens einer Beleuchtungseinrichtung ist, kann die Umgebungskarte auch in einer zentralen Einrichtung des Systems erstellt und gespeichert werden, vorzugsweise einer zentralen Steuereinrichtung des Systems. Die von der Detektionseinrichtung des Fahrzeugs aufgenommenen Objektdaten werden mit zusätzlichen Informationen ergänzt, welche eine oder mehrere Beleuchtungseinrichtungen innerhalb der Umgebung des Fahrzeugs betreffen. Diese Informationen sind bereits zuvor in Bezug auf das erfindungsgemäße Fahrzeug bzw. das erfindungsgemäße System beschrieben worden.

Es wird vorgeschlagen, dass eine Beleuchtungseinrichtung angeschaltet wird, wenn ein von dieser Beleuchtungseinrichtung ausleuchtbarer Umgebungsteilbereich einen Detektionsbereich der Detektionseinrichtung des Fahrzeugs zumindest teilweise überlappt, insbesondere die Beleuchtungseinrichtung in Abhängigkeit von einem detektierten Beleuchtungszustand innerhalb des Detektionsbereiches angeschaltet wird.

Des Weiteren kann es auch vorgesehen sein, dass eine Steuereinrichtung des Fahrzeugs einen Steuerbefehl zum Steuern einer externen Beleuchtungseinrichtung generiert und an die Beleuchtungseinrichtung übermittelt. Alternativ kann vorgesehen sein, dass eine zentrale Steuereinrichtung des Systems einen Steuerbefehl generiert und an die Beleuchtungseinrichtung übermittelt oder einen Steuerbefehl von dem Fahrzeug empfängt und diesen an die Beleuchtungseinrichtung übermittelt.

Die Merkmale und Vorteile des Verfahrens ergeben sich dabei wie zuvor in Bezug auf das erfindungsgemäße Fahrzeug bzw. das erfindungsgemäße System näher erläutert. Die entsprechenden Merkmale und Vorteile gelten somit auch als in Bezug auf das Verfahren offenbart.

### Kurze Beschreibung der Zeichnungen

Im Folgenden wird die Erfindung anhand von Ausführungsbeispielen näher erläutert. Es zeigen:
- Fig. 1: ein System aus einem Fahrzeug und zwei Beleuchtungseinrichtungen;
- Fig. 2: das Fahrzeug gemäß Fig. 1;
- Fig. 3: das System gemäß Fig. 1 während eines Betriebs;
- Fig. 4: ein System aus einem Fahrzeug, zwei Beleuchtungseinrichtungen und einer externen Steuereinrichtung während eines Betriebs.

### Beschreibung der Ausführungsformen

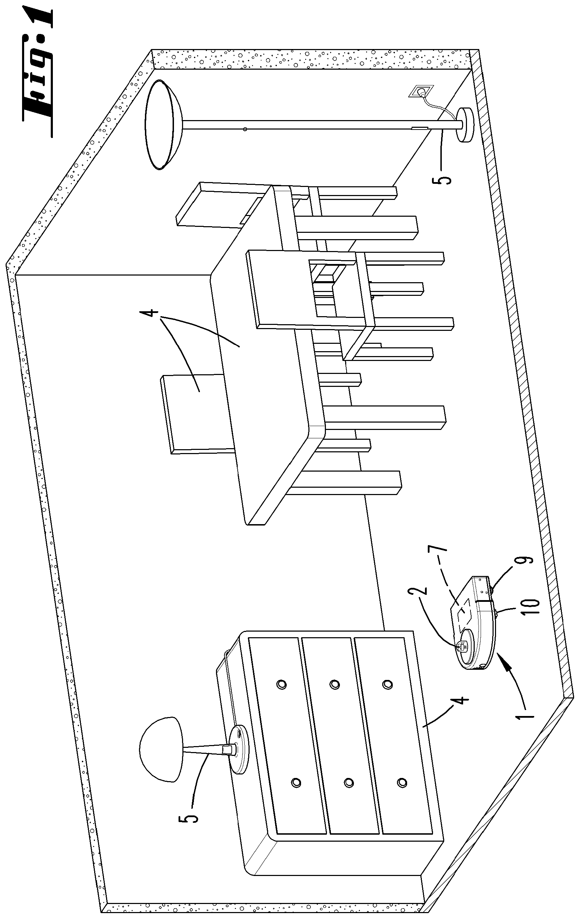

Figur 1 zeigt einen Raum einer Wohnung, in welchem ein Fahrzeug 1, nämlich hier ein autonomer Reinigungsroboter, fährt. In dem Raum sind eine Vielzahl von Objekten 4 angeordnet, nämlich hier Möbelstücke wie beispielsweise ein Tisch, mehrere Stühle und ein Schubladenschrank. Des Weiteren befinden sich in dem Raum zwei Beleuchtungseinrichtungen 5, nämlich eine als Deckenstrahler ausgebildete Stehlampe und eine auf dem Schubladenschrank befindliche Tischlampe.

Das Fahrzeug 1 weist elektromotorisch angetriebene Räder 10 zur selbsttätigen Fortbewegung des Fahrzeugs 1 sowie ein Reinigungselement 9 auf, welches hier beispielsweise als rotierende Walze ausgebildet ist. Grundsätzlich kann das Fahrzeug 1 jede Art von autonomem Fahrzeug sein. Nur beispielhaft werden hier Saugroboter, Wischroboter, Polierroboter, Schleifroboter oder dergleichen erwähnt. Das Fahrzeug 1 weist eine integrierte Steuereinrichtung 7 auf, welche Steuerbefehle für das Fahrzeug 1 genieren kann, insbesondere Fahrbefehle zur Navigation des Fahrzeugs 1 durch den Raum, unter Vermeidung einer Kollision mit den Objekten 4. Die Steuereinrichtung 7 ist hier beispielsweise ein Prozessor des Fahrzeugs 1, welcher auch zum Erstellen einer Umgebungskarte 3 für das Fahrzeug 1 dient und mit einem Datenspeicher zur Speicherung der Umgebungskarte 3 verknüpft ist. Das Fahrzeug 1 verfügt zudem über eine Detektionseinrichtung 2 zum Detektieren von Objekten 4 innerhalb der Umgebung des Fahrzeugs 1. Die Detektionseinrichtung 2 weist hier beispielsweise eine Bilderfassungseinrichtung, nämlich eine Kamera, auf. Diese kann um 360 Grad rotierbar sein oder eine Optik aufweisen, die eine Rundumsicht um das Fahrzeug 1 erlaubt, beispielsweise eine Fischaugenoptik. Das Fahrzeug 1 hat zudem eine nicht dargestellte Kommunikationseinrichtung, hier ein WLAN-Modul, über welches das Fahrzeug 1 mit anderen WLAN-Modulen kommunizieren kann. Alternativ ist es selbstverständlich auch möglich, andere Kommunikationsmodule einzusetzen, beispielsweise Bluetooth-Module oder andere.

Das Fahrzeug 1 weist eine Navigationseinrichtung auf, mittels welcher sich das Fahrzeug 1 innerhalb der Umgebung orientieren kann. Die Navigationseinrichtung umfasst hier die Detektionseinrichtung 2 sowie beispielsweise eine den Rädern 10 des Fahrzeugs 1 zugeordnete Odometrie-Messeinrichtung, welche eine gefahrene Strecke des Fahrzeugs 1 aufzeichnet. Aus den Daten der Detektionseinrichtung 2 und der Odometrie-Messeinrichtung kann die Umgebungskarte 3 erstellt werden. Die Umgebungskarte 3 beinhaltet in üblicher Art und Weise die detektierten Objekte 4 und die Beleuchtungseinrichtungen 5, welche ebenfalls Objekte 4 sind. Zudem kann die Umgebungskarte 3 neben der räumlichen Position einer Beleuchtungseinrichtung 5 weitere Informationen über die Beleuchtungseinrichtung 5 aufweisen, nämlich eine Angabe über die Art der Beleuchtungseinrichtung 5 und/oder deren Lichtstärke und/oder deren Emissionsspektrum und/oder eine Position und/oder Größe eines von der Beleuchtungseinrichtung 5 ausleuchtbaren Umgebungsteilbereiches 6 und/ oder eine Information über die Art der Beleuchtungseinrichtung 5. Diese Informationen können beispielsweise über eine nicht dargestellte Eingabeschnittstelle manuell von einem Nutzer eingegeben werden und/oder über ein Kommunikationsmodul von der jeweiligen Beleuchtungseinrichtung 5 an das Fahrzeug 1 übertragen werden. Alternativ ist es jedoch auch möglich, dass das Fahrzeug 1 während einer Lernfahrt selbst entsprechende Informationen detektiert. Dazu kann das Fahrzeug 1 beispielsweise über einen Intensitätssensor und/oder Spektralsensor verfügen, welcher eine Lichtstärke einer Beleuchtungseinrichtung 5 misst, gegebenenfalls deren Emissionsspektrum und/oder eine Position und/oder Größe eines von der Beleuchtungseinrichtung 5 beleuchteten Umgebungsteilbereiches 6. Während der Lernfahrt sind die Beleuchtungseinrichtungen 5 vorteilhaft angeschaltet, so dass das Fahrzeug 1 die entsprechenden Messungen durchführen kann. Sofern es sich bei der Beleuchtungseinrichtung 5 um eine bezogen auf die Lichtstärke dimmbare Beleuchtungseinrichtung 5 oder eine Beleuchtungseinrichtung 5 mit einem variablen Emissionsspektrum handelt, empfiehlt es sich, die Abstrahlcharakteristik der Beleuchtungseinrichtung 5 zu variieren, während das Fahrzeug 1 eine entsprechende Messung vornimmt. Somit können umfassende Informationen zu jeder einzelnen Beleuchtungseinrichtung 5 detektiert und gespeichert werden.

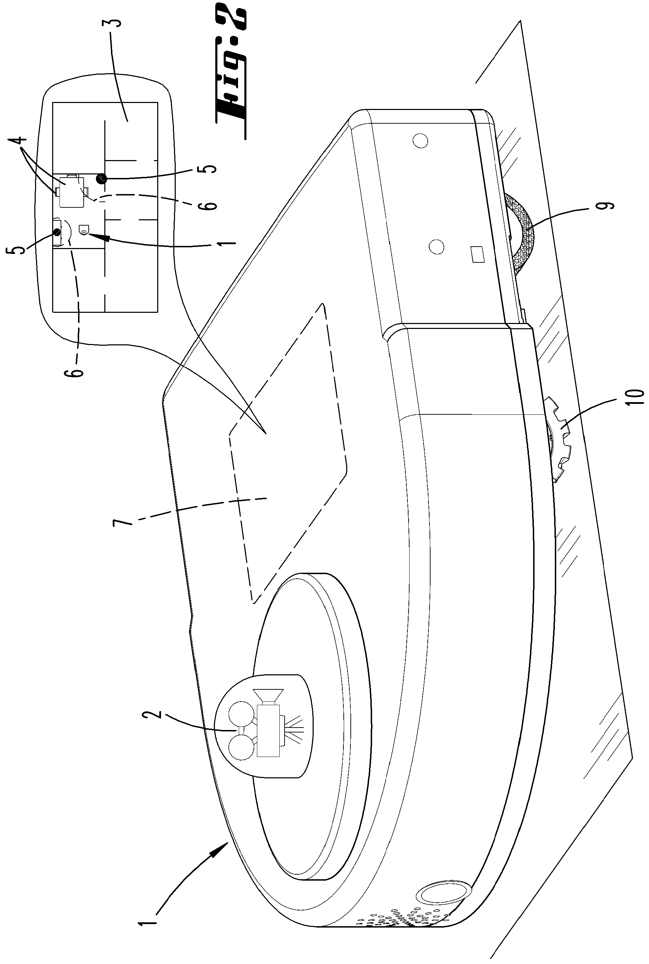

Figur 2 zeigt eine vergrößerte Darstellung des Fahrzeugs 1. In einem Datenspeicher der Steuereinrichtung 7 ist eine Umgebungskarte 3 gespeichert. Diese Umgebungskarte 3 beinhaltet unter anderem einen Grundriss des in Figur 1 gezeigten Raums. Die Umgebungskarte 3 beinhaltet die Positionen der detektierten Objekte 4 sowie die Positionen der detektierten Beleuchtungseinrichtungen 5. Darüber hinaus sind in Bezug auf die beiden Beleuchtungseinrichtungen 5 jeweils auch eine Position und eine Größe eines von der Beleuchtungseinrichtung 5 ausgeleuchteten Umgebungsteilbereiches 6 dargestellt. Der Umgebungsteilbereich 6 ist jeweils mit gestrichelter Umfangslinie skizziert. Dabei gibt die skizzierte Linie nicht eine tatsächliche Begrenzung des ausgeleuchteten Umgebungsteilbereiches 6 an, sondern vielmehr eine rechnerische Grenze, in deren Bereich die Lichtstärke hier beispielsweise ungefähr 70 Prozent des Lichtstärkemaximums beträgt. Da es sich bei den hier dargestellten Beleuchtungseinrichtungen 5 um solche mit einer kegelförmigen Abstrahlcharakteristik handelt, sind die Projektionen der Umgebungsteilbereiche 6 auf der Bodenfläche des Raumes im Wesentlichen kreisrund. Bezogen auf die als Deckenstrahler ausgebildete Beleuchtungseinrichtung 5 handelt es sich bei dem in der Umgebungskarte 3 skizzierten Umgebungsteilbereich 6 um einen Umgebungsteilbereich 6 der Bodenfläche, auf welchen die von der beleuchteten Raumdecke zurückreflektierte Strahlung trifft.

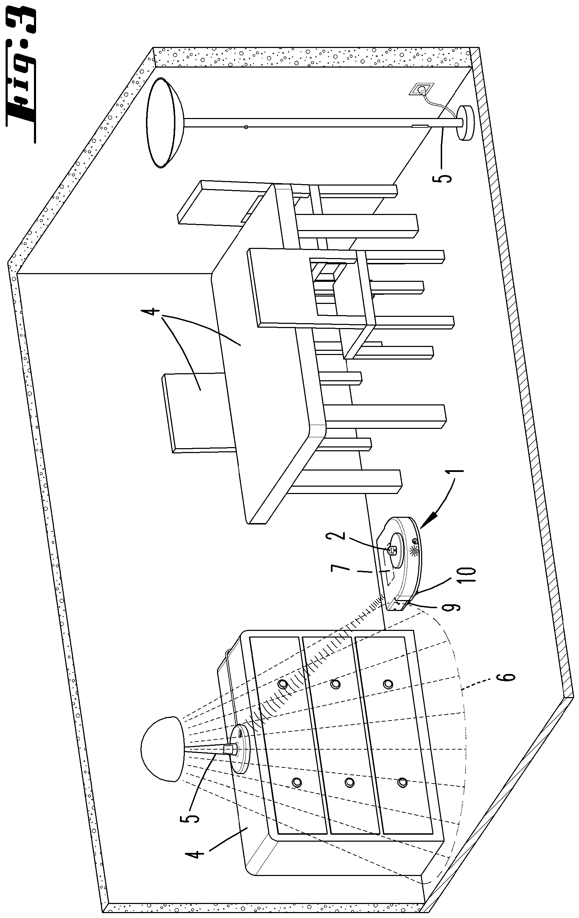

Figur 3 zeigt eine Situation, in welcher das Fahrzeug 1 innerhalb des Raumes verfährt, um dort eine Reinigungsaufgabe auszuführen. Zum Zwecke der kollisionsfreien Fortbewegung orientiert sich das Fahrzeug 1 an der Umgebungskarte 3. Dabei nimmt die Detektionseinrichtung 2 kontinuierlich Bilder der Umgebung auf, um die Umgebungskarte 3 fortzubilden und die Eigenposition des Fahrzeugs 1 innerhalb der Umgebung zu lokalisieren. Innerhalb des Raumes existieren nun Bereiche, welche beispielsweise nicht ausreichend durch Tageslicht ausgeleuchtet werden, um eine optimale Qualität der aufgenommenen Bilder sicherzustellen. Dies kann dazu führen, dass Umrisse von Objekten 4, Ansammlungen von Grobschmutz oder dergleichen nicht zuverlässig erkannt oder lokalisiert werden können. Daher ist es erforderlich, die nähere Umgebung des Fahrzeugs 1 zusätzlich durch eine oder mehrere der Beleuchtungseinrichtungen 5 auszuleuchten. In dem gezeigten Beispiel befindet sich das Fahrzeug 1 neben dem als Schubladenschrank ausgebildeten Objekt 4. Sofern sich ein Fenster des Raumes beispielsweise auf der dem Fahrzeug 1 gegenüberliegenden Seite des Objektes 4 befindet, entsteht hinter dem Objekt 4 ein Schatten, welcher die Qualität des von der Detektionseinrichtung 2 des Fahrzeugs 1 aufgenommenen Bildes reduziert. Die Detektionseinrichtung 2 erkennt die nicht optimale Beleuchtung der aufgenommenen Bilder und übermittelt eine Information darüber an die Steuereinrichtung 7 des Fahrzeugs 1. Die Steuereinrichtung 7 überprüft daraufhin in der Umgebungskarte 3, welche Beleuchtungseinrichtungen 5 in dem derzeit befahrenen Raumbereich zur Verfügung stehen. Hier erkennt die Steuereinrichtung 7, dass der Detektionsbereich der Detektionseinrichtung 2 in einen Umgebungsteilbereich 6 hineinragt, welcher von der als Tischlampe ausgebildeten Beleuchtungseinrichtung 5 ausgeleuchtet werden kann. Daraufhin generiert die Steuereinrichtung 7 einen Steuerbefehl zum Anschalten der Beleuchtungseinrichtung 5. Die Übertragung des Steuerbefehls erfolgt hier beispielsweise über ein WLAN-Kommunikationsmodul. Innerhalb des Umgebungsteilbereiches 6 kann die Detektionseinrichtung 2 nun hochqualitative Bilder aufnehmen. Sofern das Fahrzeug 1 diesen Umgebungsteilbereich 6 wieder verlässt, übermittelt die Steuereinrichtung 7 des Fahrzeugs 1 einen Steuerbefehl zum Ausschalten der Beleuchtungseinrichtung 5 an die Beleuchtungseinrichtung 5. Sofern das Fahrzeug 1 während seiner weiteren Fortbewegung durch den Raum oder durch die Wohnung wiederum in einen Raumbereich gelangt, welcher unzureichend ausgeleuchtet ist, kann erneut eine Prüfung anhand der Umgebungskarte 3 vorgenommen werden, welche Beleuchtungseinrichtung 5 zur Ausleuchtung eines bestimmten Umgebungsteilbereiches 6 geeignet ist. Grundsätzlich kann es auch vorgesehen sein, dass eine in dem Verfahrweg des Fahrzeugs 1 vorhandene Beleuchtungseinrichtung 5 immer angeschaltet wird. Alternativ ist es wie zuvor erläutert jedoch auch möglich, dass die Beleuchtungseinrichtung 5 erst bei Bedarf eingeschaltet wird. Des Weiteren kann es vorgesehen sein, dass eine Beleuchtungseinrichtung 5 ausgeschaltet wird, wenn sich das Fahrzeug 1 dem entsprechenden Umgebungsteilbereich 6 nähert. Dies kann dann vorteilhaft sein, wenn die Detektionseinrichtung 2 des Fahrzeugs 1 selbst Licht emittiert, um beispielsweise eine Rückreflexion zu messen. In diesem Fall wäre eine zusätzliche Beleuchtung der Umgebung durch eine Beleuchtungseinrichtung 5 nachteilig. Des Weiteren ist es auch denkbar, dass die Steuereinrichtung 7 des Fahrzeugs 1 die Beleuchtungseinrichtung 5 in Bezug auf weitere Parameter steuert, beispielsweise in Bezug auf deren dimmbare Lichtstärke, ein variables Emissionsspektrum und/oder eine Position und/oder Größe eines ausgeleuchteten Umgebungsteilbereiches 6.

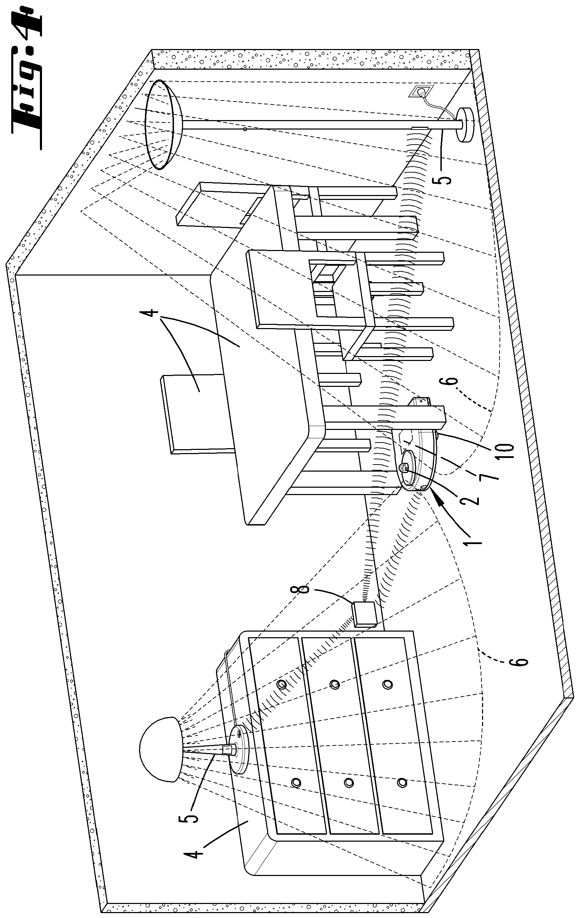

Figur 4 zeigt ein System aus einem sich selbsttätig innerhalb des Raumes fortbewegenden Fahrzeug 1, zwei Beleuchtungseinrichtungen 5 und einer zentralen Steuereinrichtung 8. Das System ist hier Teil einer Hausautomationsanlage, wobei eine Kommunikation zwischen dem Fahrzeug 1 und den Beleuchtungseinrichtungen 5 über die zentrale Steuereinrichtung 8 erfolgt. Die zentrale Steuereinrichtung 8 kann einen Access Point eines WLAN-Heimnetzwerkes darstellen. Gemäß dieser Ausführungsform erfolgt die Erfindung beispielsweise so, dass das Fahrzeug 1 wiederum innerhalb des dargestellten Raumes verfährt und Bilder mittels der Detektionseinrichtung 2 aufnimmt. Sofern das Fahrzeug 1 in einen Teilbereich des Raumes gelangt, welcher zum optimalen Betrieb der Detektionseinrichtung 2 nur ungenügend ausgeleuchtet ist, sendet das Fahrzeug 1 eine entsprechende Nachricht an die zentrale Steuereinrichtung 8. Die zentrale Steuereinrichtung 8 greift auf eine vorteilhaft zentral hinterlegte Umgebungskarte 3 zu und prüft, welche Beleuchtungseinrichtung 5 sich in der Nähe des Verfahrweges des Fahrzeugs 1 befindet. Insbesondere wird geprüft, ob ein von einer Beleuchtungseinrichtung 5 ausleuchtbarer Umgebungsteilbereich 6 in den Verfahrweg ragt. In dem gezeigten Beispiel sind beide Beleuchtungseinrichtungen 5 geeignet, die aktuelle Position des Fahrzeugs 1 zumindest teilweise zu beleuchten. Daher übermittelt die zentrale Steuereinrichtung 8 einen Steuerbefehl an jede der Beleuchtungseinrichtungen 5, woraufhin diese angeschaltet werden.

Zusätzlich wären beispielsweise Ausführungsformen möglich, bei welchen eine Beleuchtungseinrichtung 5 ein Leuchtmittel mit einem Emissionsspektrum im infraroten Spektralbereich aufweist. Die Steuereinrichtung 7, 8 könnte gezielt diese Beleuchtungseinrichtung 5 ansteuern, so dass Objekte 4, beispielsweise durch eine optimierte farbliche Differenzierung, besser erkannt werden können. Ferner kann eine Infrarotbeleuchtung auch in ansonsten dunklen Umgebungen vorteilhaft sein, um beispielsweise anwesende Personen nicht zu stören. Vorteilhaft kann eine Aufnahmerate der Detektionseinrichtung 2 so gewählt werden, dass diese oberhalb einer Variationsrate eines Emissionsspektrums der Beleuchtungseinrichtung 5 liegt. Insbesondere kann es vorgesehen sein, dass die Detektionseinrichtung 2 diesbezüglich mit der Beleuchtungseinrichtung 5 synchronisiert wird. Dies kann zusätzlich zu einer besseren Erkennung von Objekten 4 beitragen.

Selbstverständlich ist es in Bezug auf alle genannten Beispiele auch möglich, dass das Fahrzeug 1 selbst eine integrierte Beleuchtungseinrichtung 5 aufweist, um eine Ausleuchtung an Stellen des Raumes zu unterstützen, an denen eine Beleuchtung durch die externen Beleuchtungseinrichtungen 5 nicht ausreicht. Dafür könnte das Fahrzeug 1 beispielsweise eine in einem infraroten Spektralbereich oder in einem sichtbaren Spektralbereich emittierende Beleuchtungseinrichtung 5 aufweisen.

### Liste der Bezugszeichen

- 1: Fahrzeug
- 2: Detektionseinrichtung
- 3: Umgebungskarte
- 4: Objekten
- 5: Beleuchtungseinrichtung
- 6: Umgebungsteilbereich
- 7: Steuereinrichtung
- 8: Steuereinrichtung
- 9: Reinigungselement
- 10: Rad

## Patentansprüche

1. Sich selbsttätig innerhalb einer Umgebung fortbewegendes, unbemanntes Fahrzeug (1), insbesondere Reinigungsroboter, mit einer Detektionseinrichtung (2) zur Detektion von Objektdaten einer Umgebung des Fahrzeugs (1) und einer Recheneinrichtung zum Erstellen einer Umgebungskarte (3) anhand von aufgenommenen Objektdaten, wobei die Umgebungskarte (3) Positionen von innerhalb der Umgebung befindlichen Objekten (4) aufweist, **dadurch gekennzeichnet, dass** die Umgebungskarte (3) eine Information über eine Position einer separat zu dem Fahrzeug (1) ausgebildeten, externen Beleuchtungseinrichtung (5) sowie eine oder mehrere weitere Informationen über die Beleuchtungseinrichtung (5) aufweist, wobei die Information ausgewählt ist aus der Gruppe: Lichtstärke, Emissionsspektrum, Position eines von der Beleuchtungseinrichtung (5) ausleuchtbaren Umgebungsteilbereiches (6) und/oder Größe eines von der Beleuchtungseinrichtung (5) ausleuchtbaren Umgebungsteilbereiches (6).

2. Fahrzeug (1) nach Anspruch 1, **gekennzeichnet durch** eine Steuereinrichtung (7), welche eingerichtet ist, einen Steuerbefehl zum Steuern einer externen Beleuchtungseinrichtung (5) zu generieren, wobei die Steuereinrichtung (7) insbesondere eingerichtet ist, einen Steuerbefehl in Abhängigkeit von einem Betrieb der Detektionseinrichtung (2) und/oder einem Beleuchtungszustand in einem Detektionsbereich der Detektionseinrichtung (2) zu generieren.

3. Fahrzeug (1) nach Anspruch 2, **dadurch gekennzeichnet, dass** die Steuereinrichtung (7) eingerichtet ist, einen Steuerbefehl zum Einschalten einer Beleuchtungseinrichtung (5) zu generieren, wenn ein von dieser Beleuchtungseinrichtung (5) ausleuchtbarer Umgebungsteilbereich (6) einen Detektionsbereich der Detektionseinrichtung (2) zumindest teilweise überlappt, insbesondere einen Steuerbefehl in Abhängigkeit von einem detektierten Beleuchtungszustand innerhalb des Detektionsbereiches (2) zu generieren.

4. Fahrzeug (1) nach einem der vorhergehenden Ansprüche, **dadurch gekennzeichnet, dass** das Fahrzeug (1) ein Kommunikationsmodul, insbesondere ein WLAN-Modul, zur Kommunikation mit einer externen Beleuchtungseinrichtung (5) und/oder einer zentralen Steuereinrichtung (8) eines Hausautomationsnetzwerkes aufweist.

5. System aus mindestens einem sich selbsttätig innerhalb einer Umgebung fortbewegenden, unbemannten Fahrzeug (1), insbesondere einem Fahrzeug (1) nach einem der vorhergehenden Ansprüche, mit einer Detektionseinrichtung (2) zur Detektion von Objektdaten einer Umgebung des Fahrzeugs (1) und einer Recheneinrichtung zum Erstellen einer Umgebungskarte (3) anhand von aufgenommenen Objektdaten, mindestens einer separat zu dem Fahrzeug (1) ausgebildeten, externen Beleuchtungseinrichtung (5) und einer Steuereinrichtung (7, 8) zum Übermitteln eines Steuerbefehls an die Beleuchtungseinrichtung (5), **dadurch gekennzeichnet, dass** die Umgebungskarte (3) eine Information über eine Position einer Beleuchtungseinrichtung (5) sowie eine oder mehrere weitere Informationen über die Beleuchtungseinrichtung (5) aufweist, wobei die Information ausgewählt ist aus der Gruppe: Lichtstärke, Emissionsspektrum, Position eines von der Beleuchtungseinrichtung (5) ausleuchtbaren Umgebungsteilbereiches (6) und/oder Größe eines von der Beleuchtungseinrichtung (5) ausleuchtbaren Umgebungsteilbereiches (6).

6. System nach Anspruch 5, **dadurch gekennzeichnet, dass** die Steuereinrichtung (8) eine zentrale Steuereinrichtung (8), insbesondere eine Steuereinrichtung (8) eines Hausautomationsnetzwerkes, ist, welche eine Kommunikationsverbindung zu dem Fahrzeug (1) und eine Kommunikationsverbindung zu der Beleuchtungseinrichtung (5) aufweist.

7. System nach einem der Ansprüche 5 oder 6, **dadurch gekennzeichnet, dass** die Steuereinrichtung (7, 8) eingerichtet ist, einen Steuerbefehl zum Steuern einer externen Beleuchtungseinrichtung (5) zu generieren und an die Beleuchtungseinrichtung (5) zu übermitteln und/oder von dem Fahrzeug (1) zu empfangen und an die Beleuchtungseinrichtung (5) zu übermitteln.

8. System nach einem der Ansprüche 5 bis 7, **dadurch gekennzeichnet, dass** die Steuereinrichtung (7, 8) eingerichtet ist, eine Beleuchtungseinrichtung (5) zu steuern, wenn ein von dieser Beleuchtungseinrichtung (5) ausleuchtbarer Umgebungsteilbereich (6) einen Detektionsbereich der Detektionseinrichtung (2) des Fahrzeugs (1) zumindest teilweise überlappt, insbesondere die Beleuchtungseinrichtung (5) in Abhängigkeit von einem detektierten Beleuchtungszustand innerhalb des Detektionsbereiches anzuschalten.

9. System nach einem der Ansprüche 5 bis 8, **dadurch gekennzeichnet, dass** die Steuereinrichtung (7) eingerichtet ist, Fahrzeuge (1) und/oder Beleuchtungseinrichtungen (5) an dem System zu registrieren und eine Information über eine Position, eine Lichtstärke, ein Emissionsspektrum, eine Position und/oder Größe eines von der Beleuchtungseinrichtung (5) ausleuchtbaren Umgebungsteilbereiches (6) und/oder eine Art der Beleuchtungseinrichtung (5) zu empfangen.

10. Verfahren zum Betrieb eines sich selbsttätig innerhalb einer Umgebung fortbewegenden, unbemannten Fahrzeugs (1) und/oder eines Systems aus einem solchen Fahrzeug (1), einer Beleuchtungseinrichtung (5) und einer Steuereinrichtung (7, 8), insbesondere Fahrzeug (1) und/oder System nach einem der vorhergehenden Ansprüche, wobei eine Detektionseinrichtung (2) des Fahrzeugs (1) Objektdaten in einer Umgebung des Fahrzeugs (1) aufnimmt und eine Recheneinrichtung eine Umgebungskarte (3) anhand von aufgenommenen Objektdaten erstellt, **dadurch gekennzeichnet, dass** das Fahrzeug (1) eine Beleuchtungseinrichtung (5) innerhalb der Umgebung detektiert und eine Information über die Position der Beleuchtungseinrichtung (5) sowie eine oder mehrere weitere Informationen über die Beleuchtungseinrichtung (5) aufnimmt, wobei die Information ausgewählt ist aus der Gruppe: Lichtstärke, Emissionsspektrum, Position eines von der Beleuchtungseinrichtung (5) ausleuchtbaren Umgebungsteilbereiches (6) und/oder Größe eines von der Beleuchtungseinrichtung (5) ausleuchtbaren Umgebungsteilbereiches (6).

11. Verfahren nach Anspruch 10, **dadurch gekennzeichnet, dass** eine Beleuchtungseinrichtung (5) angeschaltet wird, wenn ein von dieser Beleuchtungseinrichtung (5) ausleuchtbarer Umgebungsteilbereich (6) einen Detektionsbereich (8) der Detektionseinrichtung (2) des Fahrzeugs (1) zumindest teilweise überlappt, insbesondere die Beleuchtungseinrichtung (5) in Abhängigkeit von einem detektierten Beleuchtungszustand innerhalb des Detektionsbereiches (8) angeschaltet wird.

12. Verfahren nach Anspruch 10 oder 11, **dadurch gekennzeichnet, dass** eine Steuereinrichtung (7) des Fahrzeugs (1) einen Steuerbefehl zum Steuern einer externen Beleuchtungseinrichtung (5) generiert und an die Beleuchtungseinrichtung (5) übermittelt, oder dass eine zentrale Steuereinrichtung (8) des Systems einen Steuerbefehl generiert und an die Beleuchtungseinrichtung (5) übermittelt oder einen Steuerbefehl von dem Fahrzeug (1) empfängt und an die Beleuchtungseinrichtung (5) übermittelt.

## Claims

1. An unmanned vehicle (1) that moves automatically within an environment, in particular a cleaning robot, with a detection system (2) for detecting object data in an environment of the vehicle (1) and a calculating means for generating an area map (3) based on recorded object data, wherein the area map (3) has positions of objects located within the environment, **characterized in that** the area map (3) has information about a position of an external illuminating device (5) designed separately from the vehicle (1), as well as one or several items of information about the illuminating device (5), wherein the information is selected from the following group: Light intensity, emission spectrum, position of a partial area of an environment (6) that can be illuminated by the illuminating device (5), and/or size of a partial area of an environment (6) that can be illuminated by the illuminating device (5).

2. The vehicle (1) according to claim 1, **characterized by** a controller (7), which is set up to generate a control command for controlling an external illuminating device (5), wherein the controller (7) is set up in particular to generate a control command depending on an operation of the detection system (2) and/or a lighting status in a detection range of the detection system (2).

3. The vehicle (1) according to claim 2, **characterized in that** the controller (7) is set up to generate a control command for turning on an illuminating device (5) if a partial area of the environment (6) that can be illuminated by this illuminating device (5) at least partially overlaps a detection range of the detection system (2), in particular to generate a control command depending on a detected lighting status within the detection range (2).

4. The vehicle (1) according to one of the preceding claims, **characterized in that** the vehicle (1) has a communication module, in particular a WLAN module, for communicating with an external illuminating device (5) and/or a central controller (8) of a home automation network.

5. A system comprised of at least one unmanned vehicle (1) that moves automatically within an environment, in particular a vehicle (1) according to one of the preceding claims, with a detection system (2) for detecting object data in an environment of the vehicle (6) and a calculating means for generating an area map (3) based on recorded object data, at least one external illuminating device (5) designed separately from the vehicle (1) and a controller (7, 8) for transmitting a control command to the illuminating device (5), **characterized in that** the area map (3) has information about the position of an illuminating device (5) as well as one or more items of information about the illuminating device (5), wherein the information is selected from the following group: Light intensity, emission spectrum, position of a partial area of an environment (6) that can be illuminated by the illuminating device (5), and/or size of a partial area of an environment (6) that can be illuminated by the illuminating device (5).

6. The system according to claim 5, **characterized in that** the controller (8) is a central controller (8), in particular a controller (8) of a home automation network, which has a communications link to the vehicle (1) and a communications link to the illuminating device (5).

7. The system according to one of claims 5 or 6, **characterized in that** the controller (7, 8) is set up to generate a control command for controlling an external lighting device (5) and transmit it to the illuminating device (5) and/or receive it from the vehicle (1) and transmit it to the illuminating device (5).

8. The system according to one of claims 5 to 7, **characterized in that** the controller (7, 8) is set up to control an illuminating device (5) when a partial area of an environment (6) that can be illuminated by this illuminating device (5) at least partially overlaps a detection range of the detection system (2) of the vehicle (1), in particular to turn on the illuminating device (5) depending on a detected lighting status within the detection range.

9. The system according to one of claims 5 to 8, **characterized in that** the controller (7) is set up to register vehicles (1) and/or illuminating devices (5) to the system and receive information about a position, a light intensity, an emission spectrum, a position and/or size of a partial area of the environment (6) that can be illuminated by the illuminating device (5) and/or a type of illuminating device (5).

10. A method for operating an unmanned vehicle (1) that moves automatically within an environment and/or a system comprised of such a vehicle (1), an illuminating device (5) and a controller (7, 8), in particular a vehicle (1) and/or system according to one of the preceding claims, wherein a detection system (2) of the vehicle (1) records object data in an environment of the vehicle (1) and a calculating means generates an area map (3) based on recorded object data, **characterized in that** the vehicle (1) detects an illuminating device (5) within the environment and records information about the position of the illuminating device (5) as well as one or several additional items of information about the illuminating device (5), wherein the information is selected from the following group: Light intensity, emission spectrum, position of a partial area of an environment (6) that can be illuminated by the illuminating device (5), and/or size of a partial area of an environment (6) that can be illuminated by the illuminating device (5).

11. The method according to claim 10, **characterized in that** an illuminating device (5) is turned on when a partial area of the environment (6) that can be illuminated by this illuminating device (5) at least partially overlaps a detection range (8) of the detection system (2) of the vehicle (1), in particular that the illuminating device (5) is turned on depending on a detected lighting status within the detection range (8).

12. The method according to claim 10 or 11, **characterized in that** a controller (7) of the vehicle (1) generates a control command for controlling an external illuminating device (5) and transmits it to the illuminating device (5), or that a central controller (8) of the system generates a control command and transmits it to the illuminating device (5), or receives a control command from the vehicle (1) and transmits it to the illuminating device (5).

## Revendications

1. Véhicule (1) sans équipage se déplaçant automatiquement dans un environnement, en particulier robot de nettoyage, avec un dispositif de détection (2) pour détecter des données d'objets d'un environnement du véhicule (1) et un dispositif de calcul pour établir une carte d'environnement (3) à l'aide de données d'objets enregistrées, la carte d'environnement (3) présentant des positions d'objets (4) se trouvant dans l'environnement, **caractérisé en ce que** la carte d'environnement (3) présente une information sur une position d'un dispositif d'éclairage externe (5) formé séparément du véhicule (1), ainsi qu'une ou plusieurs autres informations sur le dispositif d'éclairage (5), l'information étant choisie dans le groupe : intensité lumineuse, spectre d'émission, position d'une zone partielle d'environnement (6) pouvant être éclairée par le dispositif d'éclairage (5) et/ou taille d'une zone partielle d'environnement (6) pouvant être éclairée par le dispositif d'éclairage (5).

2. Véhicule (1) selon la revendication 1, **caractérisé par** un dispositif de commande (7) qui est agencé pour générer une instruction de commande pour commander un dispositif d'éclairage externe (5), le dispositif de commande (7) étant en particulier agencé pour générer une instruction de commande en fonction d'un fonctionnement du dispositif de détection (2) et/ou d'un état d'éclairage dans une zone de détection du dispositif de détection (2).

3. Véhicule (1) selon la revendication 2, **caractérisé en ce que** le dispositif de commande (7) est agencé pour générer une instruction de commande pour allumer un dispositif d'éclairage (5) lorsqu'une zone partielle d'environnement (6) pouvant être éclairée par ce dispositif d'éclairage (5) chevauche au moins partiellement une zone de détection du dispositif de détection (2), en particulier pour générer une instruction de commande en fonction d'un état d'éclairage détecté à l'intérieur de la zone de détection (2) .

4. Véhicule (1) selon l'une des revendications précédentes, **caractérisé en ce que** le véhicule (1) comporte un module de communication, notamment un module WLAN, pour communiquer avec un dispositif d'éclairage externe (5) et/ou un dispositif de commande central (8) d'un réseau domotique.

5. Système composé d'au moins un véhicule (1) sans équipage se déplaçant automatiquement dans un environnement, en particulier un véhicule (1) selon l'une des revendications précédentes, avec un dispositif de détection (2) pour la détection de données d'objets d'un environnement du véhicule (1) et un dispositif de calcul pour l'établissement d'une carte d'environnement (3) à l'aide de données d'objets enregistrées, au moins un dispositif d'éclairage externe (5) formé séparément du véhicule (1) et un dispositif de commande (7, 8) pour transmettre une instruction de commande au dispositif d'éclairage (5), **caractérisé en ce que** la carte d'environnement (3) présente une information sur une position d'un dispositif d'éclairage (5), ainsi qu'une ou plusieurs autres informations sur le dispositif d'éclairage (5), l'information étant choisie dans le groupe : intensité lumineuse, spectre d'émission, position d'une zone partielle d'environnement (6) pouvant être éclairée par le dispositif d'éclairage (5) et/ou taille d'une zone partielle d'environnement (6) pouvant être éclairée par le dispositif d'éclairage (5).

6. Système selon la revendication 5, **caractérisé en ce que** le dispositif de commande (8) est un dispositif de commande central (8), en particulier un dispositif de commande (8) d'un réseau domotique, qui présente une liaison de communication avec le véhicule (1) et une liaison de communication avec le dispositif d'éclairage (5).

7. Système selon l'une des revendications 5 ou 6, **caractérisé en ce que** le dispositif de commande (7, 8) est agencé pour générer une instruction de commande d'un dispositif d'éclairage externe (5) et la transmettre au dispositif d'éclairage (5) et/ou la recevoir du véhicule (1) et la transmettre au dispositif d'éclairage (5).

8. Système selon l'une des revendications 5 à 7, **caractérisé en ce que** le dispositif de commande (7, 8) est agencé pour commander un dispositif d'éclairage (5) lorsqu'une zone partielle d'environnement (6) pouvant être éclairée par ce dispositif d'éclairage (5) chevauche au moins partiellement une zone de détection du dispositif de détection (2) du véhicule (1), en particulier pour allumer le dispositif d'éclairage (5) en fonction d'un état d'éclairage détecté dans la zone de détection.

9. Système selon l'une des revendications 5 à 8, **caractérisé en ce que** le dispositif de commande (7) est agencé pour enregistrer des véhicules (1) et/ou des dispositifs d'éclairage (5) auprès du système et pour recevoir une information sur une position, une intensité lumineuse, un spectre d'émission, une position et/ou une taille d'une zone partielle d'environnement (6) pouvant être éclairée par le dispositif d'éclairage (5) et/ou un type de dispositif d'éclairage (5).

10. Procédé de fonctionnement d'un véhicule (1) sans équipage se déplaçant automatiquement dans un environnement et/ou d'un système composé d'un tel véhicule (1), d'un dispositif d'éclairage (5) et d'un dispositif de commande (7, 8), en particulier véhicule (1) et/ou système selon l'une des revendications précédentes, dans lequel un dispositif de détection (2) du véhicule (1) enregistre des données d'objets dans un environnement du véhicule (1) et un dispositif de calcul établit une carte d'environnement (3) à l'aide des données d'objets enregistrées, **caractérisé en ce que** le véhicule (1) détecte un dispositif d'éclairage (5) à l'intérieur de l'environnement et enregistre une information sur la position du dispositif d'éclairage (5), ainsi qu'une ou plusieurs autres informations sur le dispositif d'éclairage (5), l'information étant choisie dans le groupe : intensité lumineuse, spectre d'émission, position d'une zone partielle d'environnement (6) pouvant être éclairée par le dispositif d'éclairage (5) et/ou taille d'une zone partielle d'environnement (6) pouvant être éclairée par le dispositif d'éclairage (5).

11. Procédé selon la revendication 10, **caractérisé en ce qu'**un dispositif d'éclairage (5) est allumé lorsqu'une zone partielle d'environnement (6) pouvant être éclairée par ce dispositif d'éclairage (5) chevauche au moins partiellement une zone de détection (8) du dispositif de détection (2) du véhicule (1), en particulier le dispositif d'éclairage (5) est allumé en fonction d'un état d'éclairage détecté dans la zone de détection (8).

12. Procédé selon la revendication 10 ou 11, **caractérisé en ce qu'**un dispositif de commande (7) du véhicule (1) génère une instruction de commande pour commander un dispositif d'éclairage externe (5) et la transmet au dispositif d'éclairage (5), ou **en ce qu'**un dispositif de commande central (8) du système génère une instruction de commande et la transmet au dispositif d'éclairage (5) ou reçoit une instruction de commande du véhicule (1) et la transmet au dispositif d'éclairage (5).
